# EUROPEAN PATENT SPECIFICATION

(11) **EP 3 141 662 B1**
(45) Date of publication and mention of the grant of the patent: **26.09.2018**
(21) Application number: 16181890.1
(22) Date of filing: 29.07.2016
(51) Int. Cl.: E02F 3/36, E02F 3/96, E02F 9/24, E02F 9/26

(54) **FAST LOCK DEVICE WITH SENSOR**
SCHNELLVERRIEGELUNGSVORRICHTUNG MIT SENSOR
DISPOSITIF DE VERROUILLAGE RAPIDE AVEC CAPTEUR

(30) Priority: 30.07.2015 IT UB20152632
(43) Date of publication of application: 15.03.2017
(73) Proprietor: Cangini Benne S.R.L., 47027 Sarsina (FC) (IT)
(72) Inventor: CANGINI, Davide, 47025 Mercato Saraceno (IT); FAEDI, Marco, 47023 Cesena (IT)
(74) Representative: Roncuzzi, Davide

(56) References cited:
- EP-A2- 1 900 880
- EP-A2- 2 420 804
- WO-A1-2014/058380
- WO-A1-2015/060730
- US-A1- 2010 039 103

## Description

The present invention relates to a fast lock device.

The present invention relates to a monitoring group for a fast lock device. Particularly, the present invention relates to a monitoring group that can be associated to a fast lock device designed to couple to an adaptor member for an excavator arm. In more detail, the present invention relates to a monitoring group that can be associated to a fast lock designed to couple to an adaptor member for an excavator arm, and suitable to control a longitudinal position of the at least one blocking member with respect to the adaptor member.

### BACKGROUND TO THE INVENTION

As it is well known, safety and practicality of use become the more and more important at the project stage in the field of lock and release devices for connecting tools to the free end of a mechanical arm and, more particularly, of an excavator mechanical arm. This is necessary both for increasingly qualify one's own products with respect to those of the competitors, and for complying with the legal regulations on site organization and operating modalities. This kind of devices are usually provided with a fast lock connection that can be connected to the free end of the arm and with an adaptor member which is applied to the coupling portion of the tool that shall be coupled to the arm. The fast lock device and the adaptor member can be coupled together in a releasable and selectively blockable manner through a first coupling device comprising a forked portion of the fast lock device, usable to house a first transversal bar of the adaptor, and through a second coupling device, comprising a pair of retractable members/pins longitudinally movable along a given direction D of the fast lock and a second transverse bar of the adaptor. The first bar ensures that the adaptor is supported by the mechanical arm, and the two movable pins, when in forward, i.e. extracted, position, ensure that the second bar is supported, causing the bilateral locking of the adaptor and thus of the tool during the swinging. On the other hand, it can occur that the two pins are in forward position but still above the second bar, so that the adaptor (and thus the respective tool) is only unilaterally fastened, and thus free to oscillate with respect to the arm. It is clear that the verification of the pins position with respect to the second bar is an essential step to determine the appropriateness of the coupling between the tool and the arm which has to actuate it, and solutions are known wherein the fast lock device is provided with sensors to inform the operator of the actual state of the connection between the fast lock device and the respective adaptor member/tool, particularly of the actual (total or partial) lock/release state of the pins and/or safety connection, of the fast lock device with respect to the relative first transversal bar/axle of the adaptor.

In particular, for instance, from document WO 2014058380 the use is well known of a movement sensor provided with a movable element coupled to one of the pins which provides an electric signal proportional to the longitudinal position occupied by the pin itself, to which a display is associated arranged in the cab which allows to virtually recreate the actual configuration of the lock and release device. On the other hand, it is clear that such a sensor requires to be periodically calibrated or verified to check the ability thereof to represent the actual reality. This to prevent that a different, and potentially dangerous, situation, than the one recreated in the cab, corresponds to the analogic signal generated.

In view of the above description, the problem of having available a monitoring device for a fast lock device intrinsically strong and suitable to digitally recreate at least one mechanical configuration typical of the fast lock device in a reliable manner and devoid of calibration problems, is still unsolved and represents an interesting challenge for the applicant.

In view of the above description it would be desirable to have available a monitoring device for a fast lock device that, in addition to limiting and possibly overcoming the drawbacks of the prior art, defines a new standard for this kind of equipment used on the machines for earth movement.

Further examples of fast lock devices and/or monitoring groups for same are known from US 2010/039103 and EP2420804.

A fast lock device according to the preamble of claim 1 is known from WO-A1-2015/060730.

### SUMMARY OF THE PRESENT INVENTION

According to the present invention, a fast lock device is provided, whose features are recited in claim 1.

According to the invention said fast lock device, when, in use, said at least one pin is arranged with said abutment element facing a said conductor member arranged in a first position of said given positions, said pin is contained inside said fast lock device; when said at least one pin is arranged with said abutment element facing said conductor member arranged in an end position of said given positions, said pin is arranged above said bar; when said at least one pin is arranged with said abutment element facing said conductor member arranged in an intermediate position of said positions upstream of said end position in a condition of stop, said pin delimits said bar inferiorly and supports it.

Further embodiments of the present invention will be specified in the appended claims.

### BRIEF DESCRIPTION OF DRAWINGS

Further characteristics and advantages of the monitoring group and the fast lock device of the invention will be more apparent from the description below, set forth with reference to the attached drawings, that illustrate at least one non-limiting embodiment, where identical or corresponding parts of the device are identified by the same reference numbers. In particular:
- figure 1 is a schematic perspective view from the top of a lock and release device according to the present invention;
- figure 2 is a schematic perspective view from the bottom of figure 1, in enlarged scale and with some parts removed for the sake of clarity, in a first operating configuration;
- figure 3 is a perspective view from the top of figure 1 in the first operating configuration, with some parts removed for the sake of clarity;
- figure 4 a) is a perspective view from the top of figure 1 in a second operating configuration, with some parts removed for the sake of clarity;

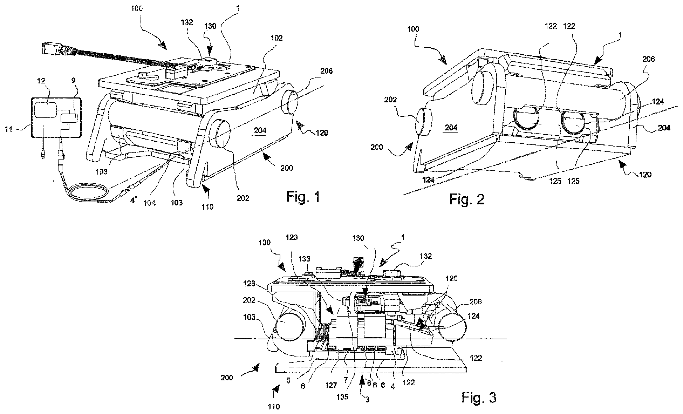

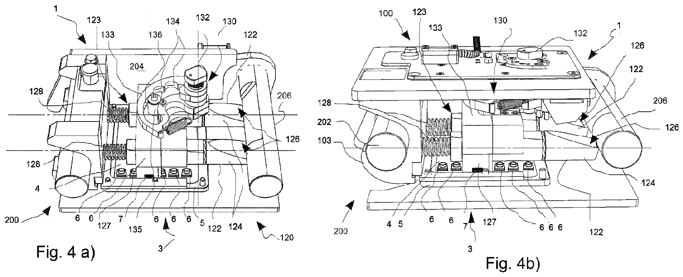

- figure 4 b) is a side elevation view of figure 1 in the second operating configuration, with some parts removed for the sake of clarity;

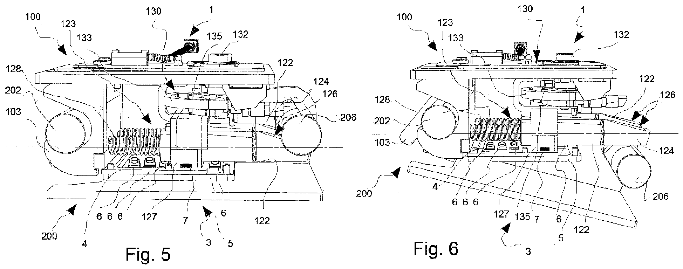

- figure 5 is a perspective side elevation view of figure 1 in a third operating configuration, with some parts removed for the sake of clarity;
- figure 6 is a perspective side elevation view of figure 1 in a fourth operating configuration, with some parts removed for the sake of clarity; and

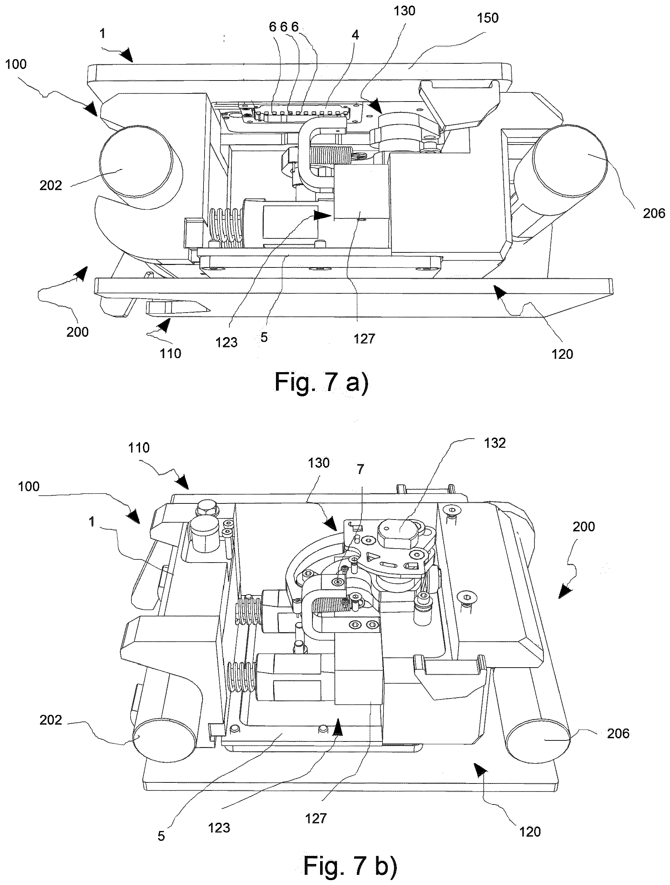

- figures 7 a) and 7 b) illustrate a variant of figure 1 in two views from the top and from the bottom with some parts removed for the sake of clarity.

### DETAILED DESCRIPTION OF THE PRESENT INVENTION

In figure 1, 100 indicates, in its entirety, a lock and release device usable to connect a tool, known and therefore not shown, to the mechanical arm, typically although without limitation, of an excavator, known and therefore not shown.

Device 100 comprises a fast lock device 1 and an adaptor member 200, of box-shaped kind, that can be coupled together in oscillating manner and that can be selectively locked through the combination of a first forked coupling device 110 and a second coupling device 120 provided with pins longitudinally movable along a given direction D, as better shown in figures 2 and 3.

In particular, with reference to figures 1 and 3, the adaptor member 200 is designed to house the fast lock device 1 which comprises a frame 104 belonging to the fast lock device 1 and provided with a pair of flanks 102 facing each other and connected together by means of a plate 5 that is arranged inferiorly, and each flank 102 is provided with a fork 103. Moreover, the first coupling device 110 comprises a first fixed transversal bar 202, carried between two flanks 204 of the adaptor member 200 to engage the forks 103. The second coupling device 120 comprises a second transversal bar 206 carried between the flanks 204 by means of the adaptor member 200 at opposite side from the first bar 202 and parallel to the latter and comprises, on the fast lock device 1, a pair of pins 122 coupled to each other by a coupling member 127, each pin being delimitated by a portion 124 shaped like a flute reed. Each flute-reed-shaped portion 124 ends with an end face 125 and is delimited at the top by an inclined face 126, designed to couple in a form-fitting manner an inferior flat face 207 of the second bar 206 in a matching manner. The two pins 122 are parts of a unique movable equipment 123 comprising the two pins and the coupling member 127 which couples them to form a substantially U-shaped blocking member.

With reference to figure 3 again, and with reference to figures 4 to 6, an electronic card 4 is associated to the fast lock device 1, the electronic card being supported by the plate 5 and arranged between the flanks 103 in order to delimitate inferiorly the fast lock device 1 below the two pins 122. The electronic card 4 presents a plurality of conductor members 6 (shown in figures 5 and 6), in which the current flows, distributed parallel to the direction D below one of the two pins 122 in a plurality of given positions. On the other hand, said pin 122 inferiorly carries (figures 2, 3, 4, 5, 6) an abutment element 7 directly or through the respective coupling member 127 of the movable equipment 123 (as in the attached figures), the abutment element comprising a magnetic foil (indicated below with the same reference number of the abutment element 7) arranged facing the conductor members 6 to interact electromagnetically and without contact with each of the underlying conductor members 6, so as to generate a signal which univocally indicates the actual position occupied by the respective pin 122 with respect to the plate 5 and, obviously, to the second bar 206. This signal is a potential difference generated by the magnetic foil 7 and measurable in the conductor member 6. In this way it is possible to identify a set of positions P1...PN, where N is any integer indicating the total amount of conductor members 6, without however limiting the scope of the invention. The position of each conductor member 6 on the electronic card 4 is defined to identify a given amount of characteristic positions of the abutment element 7, and thus of the pin 122, with respect to the plate 5 and to the bar 206, and thus to identify univocally, in use, a geometric condition where the pin 122, the movable equipment 123 and/or the bar 206 occupy each one of the given positions P1...PN.

In view of the above description, the electronic card 4, each conductor member 6 and the abutment member 7 may be considered part of a transducer or monitoring group 3 for monitoring the position of the movable equipment 123/the position of the pin 122 with respect to the plate 5 and, obviously, to the bar 206. The aim of this transducer group 3, which may also be defined as monitoring group, is to identify at least one of the relative positions of the sensorized pin 122 with respect to the bar 206 and, thus, also to distinguish between a coupling condition and a non-coupling condition between the fast lock 1 and the adaptor member 200 based on the position the pin 122/the movable equipment 123 occupy with respect to the bar 206.

In use, the signal exiting from the monitoring group 3 may be sent to an electronic exchange 9 contained inside a console 11 shown only in figure 1, which can be selectively connected to the electronic card 4 through an electronic releasable connection 4' and is used to provide a reliable image of the position of the pin 122 provided with sensor/with the abutment element 7, processed by the electronic exchange and that can be displayed on a monitor 12 integrated in the console 11. The console 11 may be installed, for example, although without limitation, in the cab of the excavator or of the machine provided with the mechanical arm, to which a tool is associated, known and therefore not shown.

It is useful to specify that the first conductor member 6 is arranged in position P1 on the electronic card 4 on the side of the forks 103 so that, in use, when the pin 122 is arranged with its abutment element 7 facing (in axis) said first conductor member 6, the pin 122 is completely contained inside the fast lock device 1; when the pin 122 is arranged with its abutment element 7 facing the last conductor member 6, arranged in position PN on the side of the bar 206, that is in end position and has the respective face 125 arranged outside the fast lock device 1 and at the maximum distance from the bar 202, then the pin 122 is arranged above the bar 206 (figure 6). In this case, the coupling between the fast lock device 1 and the adaptor member 200 has not occurred. Moreover, when the pin 122 is arranged with its abutment element 7 facing a conductor member 6 arranged in an intermediate position PI, and the respective face 126 is in contact with the flat face 207 inferiorly carried by the bar 206, the pin 122 is in stop condition with respect to the adaptor member 200; in this case, the pin 122 inferiorly delimits the bar 206 and bilaterally supports the adaptor member 200. This configuration is shown in figure 5.

The use of the fast lock device 1 and of the respective monitoring group 3 is clearly apparent from the description above and does not require further explanations. However, it might be useful to specify that the actuation of the pins 122, integral with each other through the coupling member 127, is controlled by a torsion spring 128 wound around an end portion 122' delimiting each pin 122 at opposite side from the respective flute reed 124. Particularly, the longitudinal strength exerted by these springs 128 along the given direction D is countered by a blocking mechanism 130, as better shown in figure 4, which can be controlled by a pin 132 transversal to the direction D through a lever, known and therefore not shown. The blocking mechanism 130 comprises an internal cam 133 rigidly connected to the pin 132 and provided with a plurality of seats 134, adjacent to one another and provided in a groove 136. The cam 133 is engaged by a further pin 135 carried by the coupling member 127 to mechanically control the position along the given direction D. Therefore, it may be difficult to control manually the longitudinal position of the pins 122, as it is not counterbalanced as it would be in case the pins 122 are actuated through double-acting cylinders, for which any longitudinal position (of the blocking pins 122 themselves) would be potentially stable.

Therefore, four operative conditions correspond to this structure, that, in use, are more likely to occur, and in particular:
I) the pins 122 are in a complete back position, and the springs 128 are totally compressed; the flute reeds 124 are completely detached from the bar 206, that is free and not supported (see figures 3 and 4);
II) the pins 122 have the respective inclined faces 126 in contact with the inferior face 207 of the bar 206, which is therefore completely supported (figure 5);
III) the pins 122 are in a complete forward position, and the springs 128 are totally stretched in a stop position, as the coupling member 127 is in the end right position of figure 6. In this position, the pins 122 are arranged above the bar 206, and thus the adaptor member 200 is free to oscillate downwards; and
IV) the pins 122 in the position of figures 4 a) and 4 b) are blocked in an intermediate position due to mechanical problems or excessive friction which, in some situations, for example after a prolonged use in sandy or chemically aggressive environments, may result in obstructing the free longitudinal movement of the coupling member 127.

Therefore, by using the fast lock device 1 it is possible to apply a method for detecting whether a lock pin of a fast lock device 1 occupies a given position. Taking into account that the fast lock device 1 is provided with at least one lock pin 122 extending in a given direction D, that the fast lock device 1 can be actuated with reciprocating motion between an idle position and a position interfering with the bar 206 of the adaptor member 200 to which the tool, know and therefore not shown, is connected; that the monitoring group 3 is provided with the electronic card 4 provided with a plurality of identical conductor members 6 arranged aligned in given characteristic position P1...PN under the pin 122 provided with the abutment element 7 facing the electronic card 4 to electronically interact with the electronic card 4, the method comprises a step of moving the pin 122 longitudinally with respect to the frame 104 towards the bar 206; a subsequent step of detecting the overlapping of the abutment element 7 with each conductor member 6 to signal/to identify the occupation of each characteristic position of the sensorized pin 122 with respect to the plate 5 and/or to the bar 206 corresponding to a given conductor member 6. It is clearly understood that the signalling occurs every time the position of the abutment element 7 changes due to the movement of the pin 122 from the position inside the fast lock device 1 to the position supporting the bar 206. It should be useful to specify that the conductor members 6 may be also arranged stepped onto the electronic card 4, if useful, without however limiting the scope of the invention.

Lastly, it is clearly apparent that variants and modifications can be done to the monitoring group and the fast lock device supporting it, described and illustrated herein, without however departing from the protective scope of the invention. For example, it may be useful to install the electronic card 4 in a plate 5' rigidly supported by the ceiling 150, that is a plate connecting the two flanks 102 of the fast lock device 1 facing the plate 5, as shown in figure 7 a). In this case, the abutment element 7 is carried by the movable equipment 123 through a C-shaped element rigidly connected by the coupling member 127, facing the conductor members 6 of the electronic card 4, thus directed downwards in figure 7 a).

In view of the above description, the functioning of the monitoring group 3 is based on the Hall effect that, as it is well known, identifies tension differences generated by a magnet on a conductor, in which the current flows, wherein the magnet is constituted by the abutment element 7 and the current flows in the conductor members 6.

In view of the above description, it is easily to understand that the monitoring device 3 for the fast lock device 1 is strong, since suitable to digitally recreate a mechanical situation in a reliable manner through a digital solution producing a given potential difference value and, therefore, does not require the periodic repetition of calibration operations and, therefore, is intrinsically reliable.

## Claims

1. Fast lock device (1) designed to couple to an adaptor member (200) for a tool that can be actuated by means of a mechanical arm; said fast lock device (1) being provided with a frame (104) comprising two flanks (103) connected together by means of a plate (5) (150); said fast lock device (1) comprising a movable equipment (123) provided with at least one engaging and locking pin (122) extending in a given direction (D), that can be actuated with reciprocating motion with respect to said plate (5) (150) along said given direction (D) between a first end position and an second end position; wherein, in said second end position, said pin is actuated to engage in said second end position a bar (206) of said adaptor member (200) transversally oriented with respect to said direction (D) ; said fast lock device (1) comprising a monitoring group (3) for monitoring the actual position of said pin (122) along said given direction (D), **characterised in that** said monitoring group (3) comprises an electronic card (4) carried by said plate (5) and facing said at least one pin (122) and an abutment element (7) carried by said at least one pin (122) and facing said electronic card (4), wherein said electronic card (4) comprises a plurality of conductor members (6) arranged aligned on said card (4) along said direction (D) in a plurality of given positions (P1...PN) below said at least one pin (122) in order to identify univocally, in use, a geometric condition where said abutment element (7) and the respective said at least one pin (122) occupy each of said given positions (P1...PN) with respect to said plate (5) (150) and/or said bar (206), wherein in use, when said at least one pin (122) is arranged with said abutment element (7) facing a said conductor member (6) arranged in a first position (PI) of said given positions (P1...PN) at opposite side from said bar (206), said at least one pin (122) is contained inside said fast lock device (1); when said at least one pin (122) is arranged with said abutment element (7) facing a said conductor member (6) in an end position (PN) at the side of said bar (206), said at least one pin (122) is arranged above said bar (206); when said at least one pin (122) is arranged with said abutment element (7) facing a conductor member (6) arranged in an intermediate position (PI) of said positions (P1...PN) and in a condition of stop with respect to said adaptor member (200), said pin (122) inferiorly delimits said bar (206) and bilaterally supports said adaptor member (200).

2. Fast lock device according to claim 1, **characterized in that** said abutment element (7) is carried by said at least one pin (122) in a respective longitudinal position at a given distance from a relative end (125) of said pin (122) to interact electronically with said conductor members (6) of said electronic card (4).

3. Lock and release device of the type usable to connect a tool to the mechanical arm, for example of an excavator, said device comprising an adaptor member (200) and a fast lock device (1), said adaptor member (200) and said fast lock device (1) being able to be coupled together reversibly, said adaptor member (200) being suitable to hold said fast lock device (1) in a reciprocal coupling condition, and comprising a bar (206); **characterized in that** said fast lock device (1) is a fast lock device according any one of claims 1, 2 and 3.

## Patentansprüche

1. Schnellverriegelungsvorrichtung (1), die gestaltet ist, an ein Adapterelement (200) für ein Werkzeug zu koppeln, das mit Hilfe eines mechanischen Arms betätigt werden kann; wobei die Schnellverriegelungsvorrichtung (1) mit einem Rahmen (104) bereitgestellt ist, der zwei Flanken (103) umfasst, die mit Hilfe einer Platte (5) (150) miteinander verbunden sind; wobei die Schnellverriegelungsvorrichtung (1) ein bewegliches Gerät (123) umfasst, das mit zumindest einem Eingriffs- und Verriegelungsstift (122) bereitgestellt ist, der sich in einer gegebenen Richtung (D) erstreckt, der mit Hin- und Herbewegung in Bezug auf die Platte (5) (150) entlang der gegebenen Richtung (D) zwischen einer ersten Endposition und einer zweiten Endposition betätigt werden kann; wobei der Stift in der zweiten Endposition betätigt werden kann, um in der zweiten Endposition mit einer Stange (206) des Adapterelements (200) in Eingriff zu gelangen, die in Bezug auf die Richtung (D) quer orientiert ist; wobei die Schnellverriegelungsvorrichtung (1) eine Überwachungsgruppe (3) zum Überwachen der tatsächlichen Position des Stifts (122) entlang der gegebenen Richtung (D) umfasst, **dadurch gekennzeichnet, dass** die Überwachungsgruppe (3) eine elektronische Karte (4), die durch die Platte (5) getragen wird und dem zumindest einem Stift (122) zugewandt ist, und ein Anschlagelement (7), das durch den zumindest einen Stift (122) getragen wird und der elektronischen Karte (4) zugewandt ist, umfasst, wobei die elektronische Karte (4) mehrere Leiterelemente (6) umfasst, die auf der Karte (4) entlang der Richtung (D) an mehreren gegebenen Positionen (P1...PN) unter dem zumindest einen Stift (122) ausgerichtet angeordnet sind, um bei Verwendung einstimmig einen geometrischen Zustand zu identifizieren, wo das Anschlagelement (7) und der entsprechende zumindest eine Stift (122) jede der gegebenen Positionen (P1...PN) in Bezug auf die Platte (5) (50) und/oder die Stange (206) einnehmen, wobei, wenn in Verwendung der zumindest eine Stift (122) so angeordnet ist, dass das Anschlagelement (7) einem Leiterelement (6) zugewandt ist, das in einer ersten Position (P1) der gegebenen Positionen (P1...PN) an einer gegenüberliegende Seite der Stange (206) angeordnet ist, der zumindest eine Stift (122) im Inneren der Schnellverriegelungsvorrichtung (1) aufgenommen ist; wenn der zumindest eine Stift (122) so angeordnet ist, dass das Anschlagelement (7) einem Leiterelement (6) in einer Endposition (PN) an der Seite der Stange (206) zugewandt ist, der zumindest eine Stift (122) über der Stange (206) angeordnet ist; wenn der zumindest eine Stift (122) so angeordnet ist, dass das Anschlagelement (7) einem Leiterelement (6) zugewandt ist, das in einer Zwischenposition (PI) der Positionen (P1...PN) und in einem Stoppzustand in Bezug auf das Adapterelement (200) angeordnet ist, der Stift (122) die Stange (206) unterhalb begrenzt und das Adapterelement (200) zweiseitig stützt.

2. Schnellverriegelungsvorrichtung nach Anspruch 1, **dadurch gekennzeichnet, dass** das Anschlagelement (7) durch den zumindest einen Stift (122) in einer jeweiligen Längsposition mit einem gegebenen Abstand zum relativen Ende (125) des Stifts (122) getragen wird, um elektronisch mit den Leiterelementen (6) der elektronischen Karte (4) zu interagieren.

3. Verriegelungs- und Entriegelungsvorrichtung der Art, die zum Verbinden eines Werkzeugs mit dem mechanischen Arm, zum Beispiel eines Baggers, brauchbar ist, wobei die Vorrichtung ein Adapterelement (200) und eine Schnellverriegelungsvorrichtung (1) umfasst, wobei das Adapterelement (200) und die Schnellverriegelungsvorrichtung (1) reversibel aneinander gekoppelt werden können, wobei das Adapterelement (200) geeignet ist, die Schnellverriegelungsvorrichtung (1) in einem reziproken Kopplungszustand zu halten, und eine Stange (206) umfasst; **dadurch gekennzeichnet, dass** die Schnellverriegelungsvorrichtung (1) eine Schnellverriegelungsvorrichtung nach einem der Ansprüche 1, 2 und 3 ist.

## Revendications

1. Dispositif de verrouillage rapide (1) agencé pour à être couplé à un élément d'adaptateur (200) pour un outil qui peut être actionné au moyen d'un bras mécanique ; ledit dispositif de verrouillage rapide (1) étant muni d'un cadre (104) comprenant deux côtés (103) reliés ensemble au moyen d'une plaque (5) (150) ; ledit dispositif de verrouillage rapide (1) comprenant un équipement mobile (123) muni d'au moins une broche d'engagement et de verrouillage (122) s'étendant dans une direction donnée (D), qui peut être actionnée avec un mouvement de va-et-vient par rapport à ladite plaque (5) (150) le long de ladite direction donnée (D) entre une première position d'extrémité et une seconde position d'extrémité ; dans ladite seconde position d'extrémité, ladite broche étant actionnée pour engager, dans ladite seconde position d'extrémité, une barre (206) dudit élément d'adaptateur (200) orientée transversalement par rapport à ladite direction (D) ; ledit dispositif de verrouillage rapide (1) comprenant un groupe de surveillance (3) pour surveiller la position réelle de ladite broche (122) le long de ladite direction donnée (D), **caractérisé par le fait que** ledit groupe de surveillance (3) comprend une carte électronique (4) portée par ladite plaque (5) et faisant face à ladite au moins une broche (122) et un élément de butée (7) porté par ladite au moins une broche (122) et faisant face à ladite carte électronique (4), ladite carte électronique (4) comprenant une pluralité d'éléments conducteurs (6) disposés alignés sur ladite carte (4) le long de ladite direction (D) dans une pluralité de positions données (P1... PN) au-dessous de ladite au moins une broche (122) afin d'identifier de manière univoque, en utilisation, une condition géométrique dans laquelle ledit élément de butée (7) et ladite au moins une broche respective (122) occupent chacune desdites positions données (P1... PN) par rapport à ladite plaque (5) (150) et/ou ladite barre (206), en utilisation, lorsque ladite au moins une broche (122) est disposée avec ledit élément de butée (7) faisant face à un élément conducteur précité (6) disposé dans une première position (P1) desdites positions données (P1... PN) sur un côté opposé par rapport à ladite barre (206), ladite au moins une broche (122) étant logée à l'intérieur dudit dispositif de verrouillage rapide (1) ; ladite au moins une broche (122) étant disposée avec ledit élément de butée (7) faisant face à un élément conducteur précité (6) dans une position d'extrémité (PN) sur le côté de ladite barre (206), ladite au moins une broche (122) étant disposée au-dessus de ladite barre (206) ; lorsque ladite au moins une broche (122) est disposée avec ledit élément de butée (7) faisant face à un élément conducteur (6) disposé dans une position intermédiaire (PI) desdites positions (P1... PN) et dans un état d'arrêt par rapport audit élément d'adaptateur (200), ladite broche (122) délimitant ladite barre (206) de manière inférieure et supportant ledit élément d'adaptateur (200) de manière bilatérale.

2. Dispositif de verrouillage rapide selon la revendication 1, **caractérisé par le fait que** ledit élément de butée (7) est porté par ladite au moins une broche (122) dans une position longitudinale respective à une distance donnée à partir d'une extrémité relative (125) de ladite broche (122) pour interagir électroniquement avec lesdits éléments conducteurs (6) de ladite carte électronique (4).

3. Dispositif de verrouillage rapide du type utilisable pour relier un outil au bras mécanique, par exemple d'une excavatrice, ledit dispositif comprenant un élément d'adaptateur (200) et un dispositif de verrouillage rapide (1), ledit élément d'adaptateur (200) et ledit dispositif de verrouillage rapide (1) étant aptes à être couplés ensemble de manière réversible, ledit élément d'adaptateur (200) étant approprié pour maintenir ledit dispositif de verrouillage rapide (1) dans un état de couplage réciproque, et comprenant une barre (206) ; **caractérisé par le fait que** ledit dispositif de verrouillage rapide (1) est un dispositif de verrouillage rapide selon l'une quelconque des revendications 1, 2 et 3.
